Europäisches Patentamt

European Patent Office

Office européen des brevets

(19)

(11) Publication number: **0 170 769**
**A1**

# EUROPEAN PATENT APPLICATION

(12)

(21) Application number: **85102986.8**

(22) Date of filing: **15.03.85**

(51) Int. Cl.⁴: **F 16 B 19/10**

(30) Priority: **08.08.84 US 638762**

(43) Date of publication of application: **12.02.86**
Bulletin 86/7

(84) Designated Contracting States: **BE DE FR GB IT NL SE**

(71) Applicant: **Monogram Industries, Inc., c/o Nortek, Inc. 815 Reservoir Avenue, Cranston Rhode Island 02910 (US)**

(72) Inventor: **Pratt, John D., 6153 Sard Street, Rancho Cucamonga California 91701 (US)**
Inventor: **Lomeli, Rosendo A., 12017 Fidel Street, Whittier California 90605 (US)**
Inventor: **Sadri, Shariar M., 3769 Hughes Avenue, No. 9, Los Angeles California 90034 (US)**

(74) Representative: **Patentanwälte Kohler - Schwindling - Späth, Hohentwielstrasse 41, D-7000 Stuttgart 1 (DE)**

(54) **Improved composite blind fastener.**

(57) A blind fastener (20) having a nut (21) having an axial bore (23) therethrough and with a nose at one end (24) and an enlarged head (26) at the other end, a bolt (30) having a stem (31) extending through said nut (21) and having an enlarged head (32) opposite to said nut (21) nose, and a first sleeve (40) on said bolt (30) stem (31) between said nut (21) nose and said bolt (30) head (32), said first sleeve (40) having a thick wall section (41) adjacent to said bolt (30) head (32) and a thin wall section (42) extending toward said nut (21) nose formed by a recess (43) in said section. A second sleeve (100) is mounted on the stem (31) between the first sleeve (40) and the bolt (30) head (32) which forces the thin wall section (42) to deform first outwardly then inwardly to form a bulge (105) before the thin wall section (42) engages the surface of the parts (27, 28) being fastened.

# IMPROVED COMPOSITE BLIND FASTENER

## BACKGROUND OF THE INVENTION

### Field of the Invention

This invention relates to blind fasteners; and more particularly to blind fasteners having a large bearing surface which preforms on the blind side of the structure on which it is mounted prior to engaging the structure.

### Description of the Prior Art

As discussed in the U.S.Patent 4,376,604 by Cu Soc Huynh and John D. Pratt entitled "COMPOSITE BLIND FASTENER"
. and assigned to the same assignee as this patent application, three piece blind fasteners have been known and used for many years wherein the three pieces consist of a nut threaded onto a bolt and an expansible sleeve is located therebetween. As discussed in said U.S. patent, prior three piece blind fasteners were found to encounter significant problems when utilized with sheets of material which are relatively soft or material such as a graphite composite or when utilized in structures in which very thin sheets of material are utilized on the blind side because the force applied by the sleeve on the blind side surface would be sufficiently high to deform the blind side surface and weaken the sheet at that point. Consequently the patents described in said U.S.patent and the invention described in said U.S.patent 4,376,604 were developed to achieve a large bearing surface on the blind side so that such materials could be properly fastened with minimal damage to the blind side. However, each of such aforementioned prior inventions has a number

-1-

of disadvantages associated therewith which the present invention overcomes. For example, the fastener of U.S. Patent No. 4,203,346 to Hall et al, and in the aforementioned U.S.patent 4,376,604 produce a relatively small bearing surface on the blind side particularly compared to the length of sleeve employed. Further the fact that Hall et al rely upon the shoulder 27 of the nut 10 to bend the sleeve radially outward against the back surface creates a tendency to delaminate the back surface adjoining the nut 10 at shoulder 27. Moreover, the internal taper of the sleeve bore in Hall et al increases its cost to manufacture. On the other hand the fastener described in Wilson U.S. Patent No. 4,033,222 has different disadvantages because due to its design it has relatively high blind side protrusion which limits its use to areas with sufficinet clearance on the blind side. Further, because of its number of parts it is relatively heavier and more expensive than the simple three piece blind fastener.

In response to such disadvantages, a blind fastener which achieves a large bearing surface on the blind side with an installed collar is disclosed in U.S.patent 4,457,752, commonly assigned. In this application, a blind fastener is disclosed which achieves such large bearing area with a single folded sleeve and without relying on a nut shoulder to apply the compressive supporting force on the sleeve. The blind fastener in U.S.patent 4,457,652 has low blind side protrusion, light weight and low cost but still provides a large uniform bearing surface on the blind side. However, it is desirable to have the fastener form a bulge before the bearing area contracts the material of the installation on the blind side thereof. In this manner, no damage to the installation would take place and this is particularly desirable where relative soft materials, such as composite materials, are used in the installation.

## Summary of the Invention

It is an object of this invention to provide an improved blind fastener for use in composite material installations.

It is a further object of this invention to provide a blind fastener which forms a bulge and a large bearing surface prior to contact with the installation.

It is still another object of this invention to provide a blind fastener which contacts the installation material with a relatively large bearing surface without damage to the material of the installation.

These and other objects are preferably accomplished by providing a blind fastener comprising a nut having an axial bore therethrough and with a nose at one end and an enlarged head at the other end. A bolt is provided having a stem extending through said nut and having an enlarged head adjacent to the nut nose. A sleeve is provided on the bolt stem between the nut nose and the bolt head, the sleeve having a thick wall section adjacent to the bolt head and a thin wall section extending toward the nut nose formed by a recess in the section.

Sleeve buckling preforming means is provided on the fastener adapted to initially expand the thin wall section of the sleeve first outwardly away from the sleeve, then inwardly toward the sleeve forming a bulge, then over said nut nose with the free end of the thin wall section extending inwardly toward said nut nose and having the thin wall section buckle outwardly prior to contact with the parts being fastened to form a large

-3-

bearing surface which is adapted to abut against the parts being fastened when said buckled thin wall section engages the parts being fastened.

Brief Description of the Drawing

Fig. 1 is a cross-sectional view of an assembled fastener in accordance with the teachings of the invention;

Figs. 2 through 5 are views similar to Fig. 1 showing the progressive steps of installation of the fastener of Fig. 1;

Fig. 6 is a cross-sectional view of a modification of an assembled fastener in accordance with the teachings of the invention; and

Figs. 7 through 10 are views similar to Fig. 6 showing the progressive steps of installation of the fastener of Fig. 6.

Description of the Preferred Embodiment

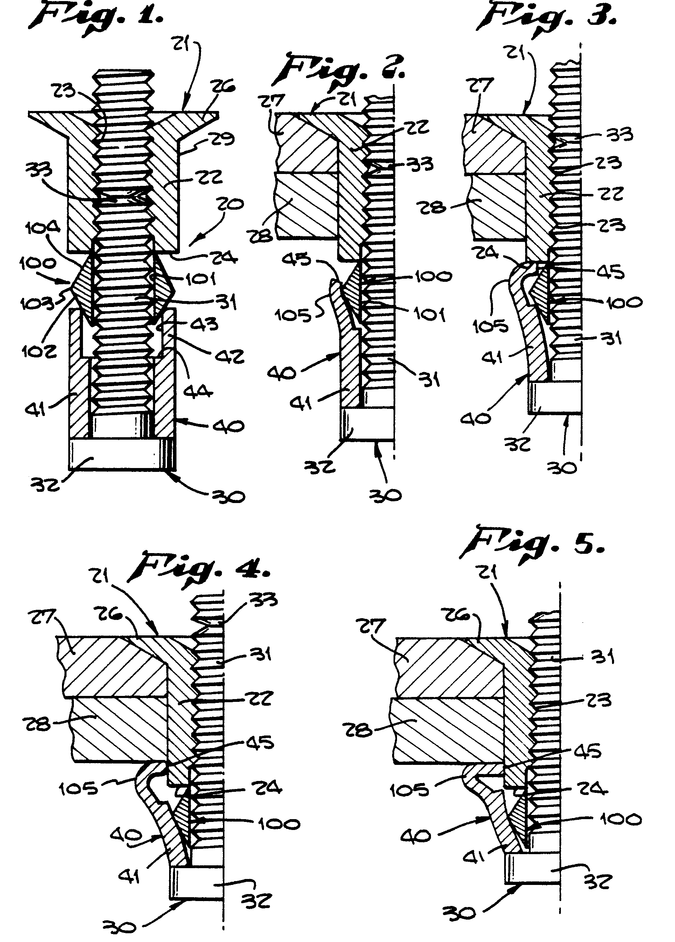

Turning now to Fig. 1 of the drawing, a blind fastener 20 is shown comprising a nut 21, a bolt 30 and a sleeve 40. The nut 21 has a body 22 with an axial bore 23 therethrough. The mean diameter (when threaded) of the bore 23 is about 55% to 70% of the external diameter of the body 22. The nut 21 terminates at a flattened end 24. At the other end of the nut 21 is an enlarged head 26 adapted to seat against the open side of the parts 27 and 28 being fastened (Fig. 2). The length of the nut 21 is adapted to extend the external surface 29 of the body 22 beyond the blind side of the parts 27,28 being fastened even in the maximum grip situation by a distance sufficient to permit the thin wall section 42 of the sleeve 40 to adapt to the external surface 29 of a nut body 22. As described in U.S.patent 4,457,652, commonly assigned, the teachings of which are incorporated herein by reference, such adaptation differs substantially depending on whether or not the collar 50 is present.

-4-

The bolt 30 has a stem 31 extending through the nut 21 and an enlarged head 32 opposite to end 24. The diameter of the head 32 is customarily equal to the diameter of the nut body 22. In the stem 31 of the bolt 30 is a breakneck 33 adapted to fracture when a preselected stress is applied to the bolt stem 31 during installation of the blind fastener 20. Such fracture is designed to occur when the breakneck is located flush with or slightly above the open side of the parts being fastened by the blind fastener upon completion of the installation of the blind fastener.

On the bolt stem 31 between the nut end 24 and the bolt head 32 is a sleeve 40 having a thin wall section 42 adjacent to the nut end 24 formed by a recess 43 in said thin wall section 42. The length of the thin wall section 42 of the sleeve 40 is about 20% to 50% of the length of the sleeve 40 and preferably is about 30% to 45% of the length of the sleeve 40. The wall thickness of the thin wall section 42 of the sleeve 40 is about 5% to 20% of the outside diameter of the sleeve 40. The thickness of the thin wall section 42 is about 50% to 70% of the thickness of the thick wall section 41. Between the thick wall section 41 and thin wall section 42 is a shoulder 44. The external diameter of the sleeve 40 is customarily equal to the diameter of the nut body 22.

As particularly contemplated in the present invention, sleeve buckling preforming means is provided for forming a buckled portion of the sleeve thin wall section 42 before section 42 contacts the blind side of the composite material during installation of the blind fastener of the invention.

As shown in Fig. 1, in addition to section 42, such preforming means includes a separable sleeve 100 having a smooth-walled interior surface 101 and a generally

-5-

triangular cross-section as shown. Sleeve 100 is loosely disposed on stem 31 between end 24 and wall section 42 (between section 42 and the outer surface of threaded stem 31, as shown).

As discussed in detail in U.S.patent 4,457,652, normally nut 21 includes a tapered end (rather than a blunt-nosed end 24 as shown) and the thin wall section 41 rides up over such tapered end until it abuts against the blind side of the installation material.

As shown in Figs. 2 through 4, sleeve 100 replaces such tapered end. As illustrated in Fig. 2, as the bolt 30 is drawn into the nut 21, the free end 45 of the thin wall section 42 contacts the outer surface of sleeve 100. Since sleeve 100 is configured to have a first outwardly tapering surface 102 (tapering to point 103), then a second inwardly tapering surface 104, as shown in Fig. 1, section 42 first rides along the outer tapering surface 102, then curves about point 103 and along outer tapering surface 104, to form a bulged portion 105, as shown in Fig. 2.

Bulged portion 105 continues to open, as shown in Fig. 3, until end 45 abuts against flat end 24 of nut 21. Continued drawing of the bolt 30 into nut 21, results in end 45 sliding past end 24 of nut 21 (Fig. 4) until end 45 abuts against part 28 of the installation. It can be seen that the free end 45 is folded or curved back upon itself so that no sharp ends dig into the blind surface of the part 28. The buckling of portion 105 formed completely before the end 45 hits the composite sheet 28

-6-

as shown in Fig. 5. The resulting configuration shown in Fig. 5 shows end 45 looped or folded so that it bears against composite sheet 28 forming a bearing surface on the blind side thereof but does not dig into composite sheet 28 thereby not destroying the installation. A wider grip range is obtained over prior art blind fasteners without damage to the installation material and thus such invention is particularly suited to installation where sheets of relatively soft materials are used. The gripping or bearing surface is particularly wide without weakening the installation sheet at the point of such gripping or bearing.

Sleeve 100 may be of any suitable materials, such as stainless steel. Specific examples of such stainless steel and other preferred materials for such fasteners are disclosed in U.S.patent 4,457,652.

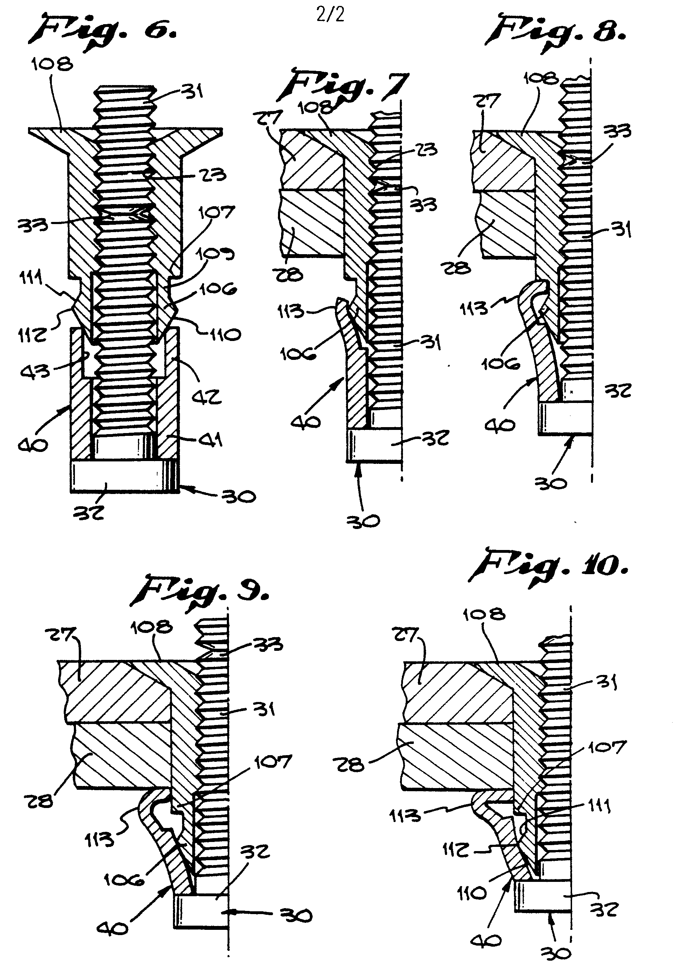

Referring now to Figs. 6 through 10, a second embodiment of the invention is shown wherein like numerals refer to like parts of the embodiment of Figs. 1 through 5. In this embodiment, the sleeve buckling preforming means, in addition to thin wall section 42, includes a nut sleeve portion 106 integral with the lowermost end 107 of nut 108. Nut 108 is otherwise similar to nut 21 of Fig. 1. End 107 is otherwise similar to end 24 of nut 21 of Fig. 1. Nut sleeve portion 106 extends downwardly from end 107 and is integrally connected thereto by a web 109 of reduced thickness between end 107 and portion 106.

Nut sleeve portion 106 is generally similar in cross-section to sleeve 100 of fig. 1 and also includes outer tapered surfaces 110 and 111 (conforming to surfaces 102 and 104, respectively, of sleeve 100 of Fig. 1) and meeting at point 112 (conforming to point 103 of sleeve 100 of Fig. 1).

The installation of the components of the embodiment of Fig. 6 is shown in Figs. 7 through 10. It can be seen that sleeve portion 106 functions similarly to sleeve 100 of the embodiment of Figs. 1 through 5. Thus, a bulged portion 113 is again preformed identical to portion 105 of Figs. 2 to 5 and portion 113 finally abuts against the installation 28 as shown in Fig. 10.

In both embodiments, the bulged portion 105,113 is preformed completely before the end of the thin walled sleeve section 42 hits the sheet material on the blind side thereof. A wider grip range is provided without damage to the composite material. The blind fastener disclosed herein achieves a large bearing surface on the blind side without damaging the blind side since the bulge is preformed before the thin wall of the sleeve contacts the blind side material. Such as fastener is less expensive, easier to fabricate and has shorter blind side protrusion than comparable large bearing surface blind fasteners. The bulge is preformed and the sleeve buckles.

The buckling takes place before the sleeve contacts the installation and thus, when the sleeve does contact the installation, the point of contact with the installation is a large folded smooth bearing surface and not the blunt end of the sleeve thereby resulting in little if any damage to the installation material. Thus, the invention disclosed herein is particularly suited for use in installations with relatively soft materials, such as graphite composite materials.

-8-

0170769

- 1 -

What is claimed is:

1. A blind fastener (20) comprising a nut (21) having an axial bore therethrough and with a nose at one end (24) and an enlarged head (26) at the other end, a bolt (30) having a stem (31) extending through said nut (21) and having an enlarged head (32) opposite to said nut (21) nose, and a sleeve (40) on said bolt (30) stem (31) between said nut (21) nose and said bolt (30) head (32), said sleeve (40) having a thick wall section (41) adjacent to said bolt (30) head (32) and a thin wall section (42) extending toward said nut (21) nose formed by a recess (44) in said section, characterized by:
sleeve (40) buckling performing means on said fastener (20) adapted to initially expand the thin wall section (42) of said sleeve (40) first outwardly away from said stem (31) then inwardly toward said stem (31) to form a bulge (105, 113), then over said nut (21) nose with the free end (45) of the thin wall section (42) extending inwardly toward said nut (21) nose and having the thin wall section (42) buckle outwardly prior to contact with the parts (27, 28) being fastened to form a large bearing surface which is adapted to abut against the parts (27, 28) being fastened when said buckled thin wall section (42) engages the parts (27, 28) being fastened.

2. The fastener of claim 1 characterized in that said sleeve (40) buckling performing means include said nut (21) nose being a blunted end (24) and that a second sleeve (100, 106) encircles said stem (31), said second sleeve (100, 106) being disposed between said nut (21) nose and said thin wall section (42) between the latter and said stem (31).

3. The fastener of claim 2 characterized in that said second sleeve (100, 106) is generally triangular in cross-section and smooth walled on the interior thereof.

./.

0170769

- 2 -

4.  The fastener of claim 2 characterized in that said second sleeve (100, 106) includes a first portion (102, 110) tapering outwardly away from said stem (31) and an integral second portion (104, 111) tapering inwardly toward said stem (31), said thin wall section (42) first moving along said first portion (102, 110), then over said second portion (103, 111) to form said bulge (105, 113) with said second sleeve (100, 106) being disposed between the interior of said bulge (105, 113) and said stem (31).

5.  The fastener of any of claims 2 to 4, characterized in that said second sleeve (100) is a separate element mounted on said stem (31).

6.  The fastener of any of claims 2 to 4, characterized in that said second sleeve (106) is an integral part of said nose portion connected thereto by a web (100) of reduced cross-section.

7.  In an aircraft installation having thin sheets of material wherein a relatively soft material is provided on the blind side, a blind fastener (20) comprising a nut (21) having an axial bore (23) therethrough mounted in an aperture in said installation and having a nose at one (24) end and an enlarged head (26) at the other end, a bolt (30) having a stem (31) extending through said nut (21) and having an enlarged head (32) opposite to said nut (21) nose, and a sleeve (40) on said bolt (30) stem (31) between said nut (21) nose and said bolt (30) head (32), said sleeve (40) having a thick wall section (41) adjacent to said bolt (30) head (32) and a thin wall section (42) extending toward said nut (21) nose formed by a recess (44) in said section, characterized by:
    sleeve buckling performing means on said fastener (20) adapted to initially expand the thin wall section (42) of said sleeve (40) first ourwardly away from said stem (31), then inwardly toward said stem (31) to form a bulge (105, 113) then over said

./.

- 3 -

nut (21) nose with the free end (45) of the thin wall section (42) extending inwardly toward said nut (21) nose and having the thin wall section (42) buckle outwardly prior to contact with the sheets being fastened to form a large bearing surface which abuts against the sheet of soft material when said buckled thin wall section (42) engages the sheet of soft material.

8. The installation of claim 7, characterized in that said sleeve buckling performing means includes said nut (21) nose being a blunted end (24) and that a second sleeve (100, 106) encircles said stem (31) disposed between said nut (21) nose and said thin wall section (42) between the latter and said stem (31).

9. The fastener of claim 8, characterized in that said second sleeve (100, 106) is generally triangular in cross-section and smooth walled on the interior thereof.

10. The fastener of claim 8, characterized in that said second sleeve (100, 106) includes a first portion (102, 106) tapering outwardly away from said stem (31) and an integral second portion (104, 111) tapering inwardly toward said stem (31), said thin wall section (42) first moving along said first portion (102, 110), then over said second portion (103, 111) to form said bulge (105, 113) with said second sleeve (100, 106) being disposed between the interior of said bulge (105, 113) and said stem (31).

11. The fastener of any of claims 8 to 10, characterized in that said second sleeve (100) is a separate element mounted on said stem (31).

12. The fastener of any of claims8 to 10, characterized in that said second sleeve (106) is an integral part of said nose portion connected thereto by a web (109) of reduced cross-section.

# Fig. 1.

# Fig. 2.

# Fig. 3.

# Fig. 4.

# Fig. 5.

**Fig. 6.**

**Fig. 7.**

**Fig. 8.**

**Fig. 9.**

**Fig. 10.**

0170769

European Patent
Office

**EUROPEAN SEARCH REPORT**

Application number

| | DOCUMENTS CONSIDERED TO BE RELEVANT | | EP 85102986.8 | |
|---|---|---|---|---|
| Category | Citation of document with indication, where appropriate, of relevant passages | Relevant to claim | CLASSIFICATION OF THE APPLICATION (Int. Cl.4) | |
| X | EP - A1 - 0 063 181 (MONOGRAM INDUSTRIES)<br>* Abstract; fig. * | 1,2 | F 16 B 19/10 | |
| D,X | & US-A-4 457 652 | | | |
| D,A | US - A - 4 376 604 (JOHN D. PRATT et al.)<br>* Abstract; fig. * | 1 | | |
| D,A | US - A - 4 203 346 (DAVID E. HALL et al.)<br>* Abstract * | 1 | | |
| D,A | US - A - 4 033 222 (LESLIE B. WILSON)<br>* Abstract * | 1 | | |
| | | | TECHNICAL FIELDS SEARCHED (Int. Cl.4) | |
| A | DE - A1 - 3 246 625 (BRILES, FRANKLIN S.)<br>* Claim 1; fig. * | 1 | F 16 B | |
| A | US - A - 3 643 544 (JOSEPH H. MASSA)<br>* Abstract; fig. * | 1 | | |
| A | US - A - 3 461 771 (FRANKLIN S. BRILES)<br>* Claim 1; fig. * | 1 | | |
| The present search report has been drawn up for all claims | | | | |
| Place of search | Date of completion of the search | | Examiner | |
| VIENNA | 11-10-1985 | | REIF | |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO Form 1503 03 82

**European Patent Office**

**EUROPEAN SEARCH REPORT**

| DOCUMENTS CONSIDERED TO BE RELEVANT | | | EP 85102986.8 |
|---|---|---|---|
| Category | Citation of document with indication, where appropriate, of relevant passages | Relevant to claim | CLASSIFICATION OF THE APPLICATION (Int. Cl.4) |
| A | EP - A1 - 0 084 641 (SPS TECHNOLO-GIES) <br> * Abstract; fig. * <br> ---- | 1 | |
| | | | **TECHNICAL FIELDS SEARCHED (Int. Cl.4)** |
| | The present search report has been drawn up for all claims | | |

| Place of search | Date of completion of the search | Examiner |
|---|---|---|
| VIENNA | 11-10-1985 | REIF |